# EUROPÄISCHE PATENTSCHRIFT

(11) **EP 3 612 501 B1**
(45) Veröffentlichungstag und Bekanntmachung des Hinweises auf die Patenterteilung: **22.07.2020**
(21) Anmeldenummer: 17721315.4
(22) Anmeldetag: 18.04.2017
(51) Int. Cl.: C04B 20/06

(54) **VERFAHREN UND VORRICHTUNG ZUR HERSTELLUNG EINES GEBLÄHTEN GRANULATS**
METHOD AND DEVICE FOR PRODUCING AN EXPANDED GRANULATE
PROCÉDÉ ET DISPOSITIF POUR LA PRODUCTION D'UN GRANULAT EXPANSÉ

(43) Veröffentlichungstag der Anmeldung: 26.02.2020
(73) Patentinhaber: Binder + Co AG, 8200 Gleisdorf (AT)
(72) Erfinder: BRUNNMAIR, Ernst Erwin, 8045 Graz (AT); SALCHINGER, Gerhard, 8261 Sinabelkirchen (AT)
(74) Vertreter: KLIMENT & HENHAPEL
(86) Internationale Anmeldenummer: PCT/AT2017/060097
(87) Internationale Veröffentlichungsnummer: WO 2018/191763

(56) Entgegenhaltungen:
- WO-A1-2016/191788

## Beschreibung

### GEBIET DER ERFINDUNG

Die vorliegende Erfindung betrifft ein Verfahren zur Herstellung eines geblähten Granulats aus sandkornförmigem, mineralischem Material mit einem Treibmittel, beispielsweise zur Herstellung eines geblähten Granulats aus Perlit- oder Obsidiansand; wobei das Material in einen Ofen aufgegeben wird; wobei das Material in einem im Wesentlichen senkrecht stehenden Ofenschacht des Ofens entlang einer Förderstrecke durch mehrere, vertikal voneinander getrennt angeordnete Heizzonen gefördert wird, wobei jede Heizzone mit zumindest einem unabhängig steuerbaren Heizelement beheizt werden kann; wobei das Material dabei auf eine kritische Temperatur erhitzt wird, bei welcher die Oberflächen der Sandkörner plastisch werden und die Sandkörner aufgrund des Treibmittels gebläht werden; wobei das geblähte Material aus dem Ofen ausgetragen wird, wobei weiters das Aufgeben des Materials gemeinsam mit einer Luftmenge von unten erfolgt, wobei das Material mittels der im Ofenschacht von unten nach oben strömenden, eine Luftströmung ausbildenden Luftmenge von unten nach oben entlang der Förderstrecke gefördert wird und wobei das Blähen der Sandkörner in der oberen Hälfte, vorzugsweise im obersten Drittel der Förderstrecke erfolgt.

Weiters betrifft die vorliegende Erfindung eine Vorrichtung zur Herstellung eines geblähten Granulats aus sandkornförmigem, mineralischem Material mit einem Treibmittel, beispielsweise zur Herstellung eines geblähten Granulats aus Perlit- oder Obsidiansand, die Vorrichtung umfassend einen Ofen mit einem im Wesentlichen senkrecht stehenden Ofenschacht, der ein oberes Ende und ein unteres Ende aufweist, wobei zwischen den beiden Enden eine Förderstrecke verläuft, welche durch mehrere, vertikal voneinander getrennt angeordnete Heizzonen führt, wobei die Heizzonen jeweils zumindest ein voneinander unabhängig steuerbares Heizelement aufweisen, um das Material auf eine kritische Temperatur zu erhitzen und die Sandkörner zu blähen, wobei weiters mindestens ein Zuführmittel vorgesehen ist, um das ungeblähte Material gemeinsam mit einer Luftmenge am unteren Ende des Ofenschachts in Richtung oberes Ende des Ofenschachts so in den Ofenschacht einzublasen, dass die Luftmenge eine von unten nach oben strömende Luftströmung ausbildet, mittels welcher das Material von unten nach oben entlang der Förderstrecke gefördert wird, um in der oberen Hälfte, vorzugsweise im obersten Drittel der Förderstrecke gebläht zu werden.

### STAND DER TECHNIK

Aus der AT 15001 U1 sind ein Verfahren und eine Vorrichtung zum geschlossenzelligen Blähen von mineralischen Materialien, insbesondere von Sanden aus vulkanischen Gesteinen wie z.B. Perlit oder Obsidian, mit sehr kleinen Körnungen von weniger als 100 µm bekannt. Dabei wird der aufbereitete Rohsand in einem möglichst engen Kornband, vorzugsweise unter Anwendung von Druckluft, zuerst dispergiert und anschließend in einen mehrere unabhängig voneinander regelbare Heizzonen umfassenden vertikalen Expansions- bzw. Ofenschacht von unten aufgegeben. Im Ofenschacht selbst wird die Wärme durch Wärmestrahlung von einer inneren Ofenschachtoberfläche auf die Körner übertragen. Weiters finden konvektive Wärmeübertragungsvorgänge statt, nämlich einerseits von der heißen Ofenschachtoberfläche auf das strömende Medium und andererseits durch die Geschwindigkeitsunterschiede zwischen dem strömenden Medium und den Körnern vom Korn auf das strömende Medium. Es zeigt sich, dass diese konvektiven Wärmeübertragungsvorgänge zu einer unerwünschten Beeinträchtigung der Gleichförmigkeit des Expansionsprodukts führen. Insbesondere werden mit bekannten Verfahren und Vorrichtungen vergleichsweise kleinere Körner überexpandiert und vergleichsweise größere Körner unvollständig expandiert bzw. gebläht.

Aus der WO 2016/191788 A1 sind ein Verfahren und eine Vorrichtung gemäß dem Oberbegriff der unabhängigen Ansprüche 1 und 9 bekannt.

### AUFGABE DER ERFINDUNG

Es ist daher Aufgabe der vorliegenden Erfindung, ein verbessertes Verfahren bzw. eine verbesserte Vorrichtung für die Herstellung eines geblähten Granulats aus Material mit sehr kleinen Körnungen zur Verfügung zu stellen, die die genannten Nachteile vermeiden und eine erhöhte Gleichförmigkeit des geblähten Granulats ermöglichen.

### DARSTELLUNG DER ERFINDUNG

Zunächst ist Ausgangspunkt der vorliegenden Erfindung die Erkenntnis, dass die Regelung der Strömungsgeschwindigkeit des strömenden Mediums, insbesondere jener Luft, die auch für die Dispergierung verwendet wird, alleine nicht zum gewünschten Erfolg führt. Versucht man, durch möglichst geringe Strömungsgeschwindigkeit der Dispergierluft im Ofenschacht die Verweilzeit von gröberen (Sand-)Körnern zu vergrößern (längere Verweilzeit bedeutet eine höhere Energieübertragung durch Wärmestrahlung auf das Korn), erfahren die Körner durch den Geschwindigkeitsunterschied zwischen Dispergierluft und Material einen Energieverlust durch Konvektion an die Dispergierluft. Versucht man hingegen, durch möglichst hohe Strömungsgeschwindigkeit der Dispergierluft den Geschwindigkeitsunterschied zwischen Dispergierluft und Material gering zu halten, reicht die Verweilzeit im Ofenschacht nicht mehr aus, um die Körner auf Erweichungstemperatur zu erwärmen.

Die Idee der vorliegenden Erfindung ist nunmehr, dass das sandkornförmige Material vor dessen Eintritt in den Ofenschacht auf eine Temperatur unterhalb des Erweichungspunktes des Vulkanglases bzw. unterhalb der kritischen Temperatur des jeweiligen sandkornförmigen Materials erhitzt wird. Durch die Höhe dieser vorgeschalteten Anwärmung lässt sich die vom Korn auf das Medium übertragene Wärmemenge und damit der Expansionszeitpunkt sehr feinfühlig - auch innerhalb einer Heizzone - regeln. Eine Erhöhung der Temperatur (der Anwärmung) bewirkt dabei ein früheres Eintreten der Expansion und führt für gewöhnlich auch zu leichteren Granulaten. Eine Verringerung der Temperatur (der Anwärmung) führt zu gegenteiligen Effekten. Ein weiterer Vorteil ist, dass durch die reduzierte Wärmeabgabe eine homogenere Temperaturverteilung im Korn und damit ein gleichmäßigeres Expansionsergebnis erzielt werden.

Das Anwärmen des Materials bietet - neben der Detektion des isenthalpen Expansionsvorgangs und der Anpassung des Temperaturprofils im Schacht - eine zusätzliche Möglichkeit, das Expansionsergebnis gezielt zu beeinflussen. Insbesondere kann mittels des Anwärmens sichergestellt werden, dass die Expansion im letzten Schachtelement bzw. in der oberen Hälfte, vorzugsweise im obersten Drittel einer Förderstrecke im Ofenschacht stattfindet und keinesfalls davor.

Daher ist es bei einem Verfahren zur Herstellung eines geblähten Granulats aus sandkornförmigem, mineralischem Material mit einem Treibmittel, beispielsweise zur Herstellung eines geblähten Granulats aus Perlit- oder Obsidiansand; wobei das Material in einen Ofen aufgegeben wird; wobei das Material in einem im Wesentlichen senkrecht stehenden Ofenschacht des Ofens entlang einer Förderstrecke durch mehrere, vertikal voneinander getrennt angeordnete Heizzonen gefördert wird, wobei jede Heizzone mit zumindest einem unabhängig steuerbaren Heizelement beheizt werden kann; wobei das Material dabei auf eine kritische Temperatur erhitzt wird, bei welcher die Oberflächen der Sandkörner plastisch werden und die Sandkörner aufgrund des Treibmittels gebläht werden; wobei das geblähte Material aus dem Ofen ausgetragen wird, wobei weiters das Aufgeben des Materials gemeinsam mit einer Luftmenge von unten erfolgt, wobei das Material mittels der im Ofenschacht von unten nach oben strömenden, eine Luftströmung ausbildenden Luftmenge von unten nach oben entlang der Förderstrecke gefördert wird und wobei das Blähen der Sandkörner in der oberen Hälfte, vorzugsweise im obersten Drittel, der Förderstrecke erfolgt, erfindungsgemäß vorgesehen, dass das Material angewärmt wird, sodass das Material unmittelbar vor dessen Eintritt in den Ofenschacht eine Materialeintrittstemperatur aufweist, die kleiner ist als die kritische Temperatur und größer als eine Umgebungstemperatur.

D.h. die Heizzonen definieren dabei den Ofenschacht bzw. ist unter Ofenschacht jener Abschnitt des Ofens zu verstehen, in dem die Heizzonen angeordnet sind.

Unter "im Wesentlichen senkrecht stehend" ist zu verstehen, dass eine geringfügige Abweichung von der Senkrechten, z.B. aufgrund herstellungstechnischer Fehlertoleranzen, möglich ist.

Unter der Materialeintrittstemperatur ist jene Temperatur des Materials zu verstehen, die dieses gemittelt über das aufgegebene Material unmittelbar vor Eintritt in den Ofenschacht hat. Diese Materialeintrittstemperatur ist jedenfalls rechnerisch über den bekannten Energieeintrag und die bekannten Massenströme ermittelbar. Es ist auch denkbar, dass die Materialeintrittstemperatur gemessen werden kann.

Die Umgebungstemperatur ist vorzugsweise in einer Umgebung außerhalb des Ofens gemessen und zwar in unmittelbarer Nähe von jenem Bereich, wo das Material in den Ofenschacht eintritt.

Analog ist es bei einer Vorrichtung zur Herstellung eines geblähten Granulats aus sandkornförmigem, mineralischem Material mit einem Treibmittel, beispielsweise zur Herstellung eines geblähten Granulats aus Perlit- oder Obsidiansand, die Vorrichtung umfassend einen Ofen mit einem im Wesentlichen senkrecht stehenden Ofenschacht, der ein oberes Ende und ein unteres Ende aufweist, wobei zwischen den beiden Enden eine Förderstrecke verläuft, welche durch mehrere, vertikal voneinander getrennt angeordnete Heizzonen führt, wobei die Heizzonen jeweils zumindest ein voneinander unabhängig steuerbares Heizelement aufweisen, um das Material auf eine kritische Temperatur zu erhitzen und die Sandkörner zu blähen, wobei weiters mindestens ein Zuführmittel vorgesehen ist, um das ungeblähte Material gemeinsam mit einer Luftmenge am unteren Ende des Ofenschachts in Richtung oberes Ende des Ofenschachts so in den Ofenschacht einzublasen, dass die Luftmenge eine von unten nach oben strömende Luftströmung ausbildet, mittels welcher das Material von unten nach oben entlang der Förderstrecke gefördert wird, um in der oberen Hälfte, vorzugsweise im obersten Drittel, der Förderstrecke gebläht zu werden, erfindungsgemäß vorgesehen, dass mindestens ein dem Ofenschacht vorgeschaltetes Mittel zum Anwärmen des Materials vorgesehen ist, um zu gewährleisten, dass das Material bei dessen Eintritt in den Ofenschacht eine Materialeintrittstemperatur aufweist, die kleiner ist als die kritische Temperatur und größer als eine Umgebungstemperatur. Gemäß dem oben Gesagten ist die Materialeintrittstemperatur die Temperatur des Materials in einem Bereich, der zwischen dem Zuführmittel und dem Ofenschacht angeordnet ist.

Zum Anwärmen des Materials bietet sich insbesondere die Luftmenge an. Entsprechend ist es bei einer bevorzugten Ausführungsform des erfindungsgemäßen Verfahrens vorgesehen, dass die Luftmenge auf eine zweite erhöhte Temperatur, die kleiner ist als die kritische Temperatur und größer als die Umgebungstemperatur, angewärmt wird. D.h. die auf die zweite erhöhte Temperatur angewärmte Luft kann zum Anwärmen des Materials auf die Materialeintrittstemperatur verwendet werden. Vorzugsweise ist die Materialeintrittstemperatur dabei ungleich der zweiten erhöhten Temperatur, besonders bevorzugt kleiner als die zweite erhöhte Temperatur.

Analog ist es bei einer bevorzugten Ausführungsform der erfindungsgemäßen Vorrichtung vorgesehen, dass mindestens ein dem Ofenschacht vorgeschaltetes Mittel zum Anwärmen der Luftmenge auf eine zweite erhöhte Temperatur, die kleiner ist als die kritische Temperatur und größer als die Umgebungstemperatur, vorgesehen ist.

Bei einer bevorzugten Ausführungsform des erfindungsgemäßen Verfahrens ist vorgesehen, dass das Material in der Luftmenge dispergiert wird, bevor das Material in den Ofenschacht eintritt. Entsprechend weist das dispergierte Material unmittelbar vor dessen Eintritt in den Ofenschacht die Materialeintrittstemperatur auf, welche, wie oben bereits festgehalten, zumindest rechnerisch ermittelbar ist. Die Dispergierung stellt sicher, dass das Material mit einer möglichst homogenen räumlichen Verteilung in den Ofenschacht eintritt und diesen in der Folge durchströmt. Eine ungewollte Bildung von Agglomeraten der zu blähenden Sandkörner, die in weiterer Folge zu ungewollten Agglomeraten geblähter Mikrosphären führen würde, wird hierdurch verhindert.

Analog ist es bei einer bevorzugten Ausführungsform der erfindungsgemäßen Vorrichtung vorgesehen, dass das mindestens eine Zuführmittel eine Feststoff/Luft-Düse umfasst, welcher Druckluft und das ungeblähte Material zuführbar sind, um das Material in der Luftmenge zu dispergieren. D.h. die Luftmenge wird durch die Druckluft zur Verfügung gestellt bzw. ausgebildet. Entsprechend kann auch das oben genannte Anwärmen der Luftmenge durch ein Anheizen bzw. Anwärmen der Druckluft erfolgen. Dieses Anwärmen kann z.B. durch eine Heizung in einem Druckluftbehälter ermöglicht werden.

Alternativ oder zusätzlich zum Anwärmen des Materials mittels der angewärmten Luftmenge bzw. Druckluft ist es bei einer bevorzugten Ausführungsform des erfindungsgemäßen Verfahrens vorgesehen, dass das Material vor dem Dispergieren auf eine erste erhöhte Temperatur, die kleiner ist als die kritische Temperatur und größer als die Umgebungstemperatur, angewärmt wird. Grundsätzlich ist dabei die erste erhöhte Temperatur eine mittlere Temperatur gemittelt über das Material vor dem Dispergieren bzw. vor der Düse. D.h. einzelne Sandkörper können eine von der ersten erhöhten Temperatur abweichende Temperatur aufweisen.

Analog ist es bei einer bevorzugten Ausführungsform der erfindungsgemäßen Vorrichtung vorgesehen, dass mindestens ein der Feststoff/Luft-Düse vorgeschaltetes Mittel zum Anwärmen des Materials auf eine erste erhöhte Temperatur, die kleiner ist als die kritische Temperatur und größer als die Umgebungstemperatur, vorgesehen ist.

Um eine konstruktiv einfache Umsetzung des Anwärmens der Luftmenge zu ermöglichen, ist es bei einer bevorzugten Ausführungsform des erfindungsgemäßen Verfahrens vorgesehen, dass die Luftmenge vor dem Dispergieren auf die zweite erhöhte Temperatur angewärmt wird.

Analog ist es bei einer bevorzugten Ausführungsform der erfindungsgemäßen Vorrichtung vorgesehen, dass das mindestens eine Mittel zum Anwärmen der Luftmenge auf die zweite erhöhte kritische Temperatur der Feststoff/Luft-Düse vorgeschaltet ist.

Gemäß dem oben Gesagten ist es bei einer bevorzugten Ausführungsform des erfindungsgemäßen Verfahrens vorgesehen, dass als Mittel zum Anwärmen des Materials auf die Materialeintrittstemperatur zumindest die auf die zweite erhöhte Temperatur angewärmte Luftmenge vorgesehen ist. D.h. es können zusätzlich auch noch weitere Mittel zum Anwärmen des Materials auf die Materialeintrittstemperatur vorgesehen sein.

Analog ist es bei einer bevorzugten Ausführungsform der erfindungsgemäßen Vorrichtung vorgesehen, dass als Mittel zum Anwärmen des Materials auf die Materialeintrittstemperatur zumindest die auf die zweite erhöhte Temperatur angewärmte Luftmenge vorgesehen ist.

Alternativ oder zusätzlich ist es bei einer bevorzugten Ausführungsform des erfindungsgemäßen Verfahrens vorgesehen, dass mindestens eine Heizung vorgesehen ist, mit welcher Heizung das Material in einem Vorratsbehälter vor dem Dispergieren auf die erste erhöhte Temperatur angewärmt wird. D.h. auch dies trägt zur Erwärmung des Materials auf die Materialeintrittstemperatur bei oder stellt alleine besagte Erwärmung dar.

Analog ist es bei einer bevorzugten Ausführungsform der erfindungsgemäßen Vorrichtung vorgesehen, dass ein Vorratsbehälter für das Material vorgesehen ist und dass das mindestens eine, der Feststoff/Luft-Düse vorgeschaltete Mittel zum Anwärmen des Materials auf die erste erhöhte Temperatur mindestens eine Heizung umfasst, mit welcher im Vorratsbehälter befindliches Material anwärmbar ist.

Um den Aufwand für das erfindungsgemäße Verfahren gering zu halten, ist es bei einer bevorzugten Ausführungsform des erfindungsgemäßen Verfahrens vorgesehen, dass als Mittel zum Anwärmen des Materials auf die Materialeintrittstemperatur lediglich die auf die zweite erhöhte Temperatur angewärmte Luftmenge vorgesehen ist. Insbesondere ist in diesem Fall für das Anwärmen kein beheizter Vorratsbehälter für das Material vorgesehen.

Analog ist es bei einer bevorzugten Ausführungsform der erfindungsgemäßen Vorrichtung vorgesehen, dass als Mittel zum Anwärmen des Materials auf die Materialeintrittstemperatur lediglich die auf die zweite erhöhte Temperatur angewärmte Luftmenge vorgesehen ist.

Für den Fall, dass sowohl die Luftmenge angewärmt wird als auch ein Anwärmen des Materials auf die erste erhöhte Temperatur erfolgt, hat es sich als vorteilhaft für ein besonders gleichmäßiges Expansionsresultat erwiesen, dass erste und zweite erhöhte Temperatur möglichst gleich sind. Daher ist es bei einer bevorzugten Ausführungsform des erfindungsgemäßen Verfahrens vorgesehen, dass der Absolutbetrag einer Differenztemperatur, die die Differenz zwischen der ersten erhöhten Temperatur und der zweiten erhöhten Temperatur ist, höchstens 50%, bevorzugt höchstens 30%, besonders bevorzugt höchstens 10%, der ersten erhöhten Temperatur ist.

Analog ist es bei einer bevorzugten Ausführungsform der erfindungsgemäßen Vorrichtung vorgesehen, dass der Absolutbetrag einer Differenztemperatur, die die Differenz zwischen der ersten erhöhten Temperatur und der zweiten erhöhten Temperatur ist, höchstens 50%, bevorzugt höchstens 30%, besonders bevorzugt höchstens 10%, der ersten erhöhten Temperatur ist.

Um das Expansionsresultat besonders einfach zu optimieren, ist es bei einer besonders bevorzugten Ausführungsform des erfindungsgemäßen Verfahrens vorgesehen, dass der Absolutbetrag der Differenztemperatur höchstens 2% der ersten erhöhten Temperatur ist, wobei die Differenztemperatur vorzugsweise null ist.

Analog ist es bei einer besonders bevorzugten Ausführungsform der erfindungsgemäßen Vorrichtung vorgesehen, dass der Absolutbetrag der Differenztemperatur höchstens 2% der ersten erhöhten Temperatur ist, wobei die Differenztemperatur vorzugsweise null ist.

Bei einer bevorzugten Ausführungsform des erfindungsgemäßen Verfahrens ist vorgesehen, dass die zweite erhöhte Temperatur kleiner als die erste erhöhte Temperatur ist. Hierdurch erfahren kleine Partikel bzw. Körner in der Folge, insbesondere beim Dispergieren, eine höhere Abkühlung als große, was im nachfolgenden Ofenschacht aufgrund der spezifisch größeren Oberfläche der kleineren Partikel kompensiert wird. Dadurch lässt sich ein qualitativ noch homogeneres Endprodukt erhalten.

Analog ist es bei einer bevorzugten Ausführungsform der erfindungsgemäßen Vorrichtung vorgesehen, dass die zweite erhöhte Temperatur kleiner als die erste erhöhte Temperatur ist.

Um das Expansionsresultat in Abhängigkeit vom Kornband weiter zu optimieren, ist es bei einer besonders bevorzugten Ausführungsform des erfindungsgemäßen Verfahrens vorgesehen, dass die zweite erhöhte Temperatur in Abhängigkeit vom Kornband des Materials gewählt wird, wobei die zweite erhöhte Temperatur umso niedriger gewählt wird, je größer das Kornband des Materials ist.

Wie eingangs bereits festgehalten, besteht eine zusätzliche Regelungsmöglichkeit in der Detektion des isenthalpen Expansionsvorgangs, der einen Temperatursturz, d.h. eine abrupte Verringerung der Materialtemperatur, zur Folge hat, und der entsprechenden Anpassung des Temperaturprofils im Schacht. D.h. dieser Temperatursturz ist keine Folge eines eingestellten Temperaturprofils im Ofenschacht, sondern auf den isenthalpen Blähvorgang zurückzuführen. Durch Detektion des Temperatursturzes bzw. des isenthalpen Blähvorgangs können die Oberflächeneigenschaften der geblähten Körner gezielt beeinflusst werden. Z.B. kann ein neuerliches Aufheizen über die kritische Temperatur verhindert werden, um ein Aufreißen der Oberfläche zu unterbinden und insbesondere vollständig geschlossenzellig geblähte Körner zu erhalten. Oder es kann ein solcher erneuter Temperaturanstieg bewusst eingeleitet werden, wenn ein Aufreißen der Oberfläche der geblähten Körner bewusst in Kauf genommen oder sogar erzielt werden soll. Entsprechend ist es bei einer bevorzugten Ausführungsform des erfindungsgemäßen Verfahrens vorgesehen, dass bei Detektion einer ersten Verringerung der Temperatur des Materials zwischen zwei aufeinander folgenden Positionen entlang der Förderstrecke die Heizelemente entlang der verbleibenden Förderstrecke in Abhängigkeit von der kritischen Temperatur geregelt werden, um eine Zunahme der Materialtemperatur entlang der verbleibenden Förderstrecke auf oder über die kritische Temperatur zu verhindern oder gezielt zu ermöglichen.

Analog ist es bei einer bevorzugten Ausführungsform der erfindungsgemäßen Vorrichtung vorgesehen, dass Materialtemperaturmessmittel zur direkten und/oder indirekten Messung der Temperatur und/oder der Temperaturänderung des Materials entlang der Förderstrecke vorgesehen sind sowie eine Regel- und Steuereinheit, die mit den Materialtemperaturmessmitteln und mit den Heizelementen der Heizzonen verbunden ist, um eine erste Verringerung der Temperatur des Materials, bevorzugt von mindestens 20°C, zwischen zwei aufeinander folgenden Positionen entlang der Förderstrecke zu detektieren, und dass die Heizelemente durch die Regel- und Steuereinheit in Abhängigkeit von der kritischen Temperatur regelbar sind, um eine Zunahme der Materialtemperatur entlang der verbleibenden Förderstrecke auf oder über die kritische Temperatur zu verhindern oder gezielt zu ermöglichen.

Um den Expansions- bzw. Blähprozess noch feinfühliger regeln zu können, ist es bei einer bevorzugten Ausführungsform des erfindungsgemäßen Verfahrens vorgesehen, dass nach dem Austragen die Größe und/oder Dichte der geblähten Sandkörner, vorzugsweise laufend, bestimmt wird. Vorzugsweise ist hierfür eine Schüttdichtemessung vorgesehen. Diese kann z.B. permanent 60-90% des geblähten Granulats hinsichtlich des Schüttgewichts kontrollieren. Durch die Messung kann das Expansionsresultat laufend kontrolliert werden und können Verfahrensparameter sofort angepasst werden, wenn das Expansionsresultat vom gewünschten Expansionsresultat abweicht. D.h. es kann die Dichte der geblähten Sandkörner gezielt geregelt werden.

Analog ist es bei einer bevorzugten Ausführungsform der erfindungsgemäßen Vorrichtung vorgesehen, dass Mittel zur, vorzugsweise laufenden, Bestimmung der Größe und/oder der Dichte der geblähten Sandkörner vorgesehen sind.

Zur besonders effizienten Regelung der Dichte der geblähten Körner ist es bei einer besonders bevorzugten Ausführungsform des erfindungsgemäßen Verfahrens vorgesehen, dass zur Regelung der Dichte der geblähten Sandkörner die Leistung des mindestens einen Heizelements einer letzten Heizzone gesteuert wird. Insbesondere kann dabei die Leistung auf einen gewünschten Wert oder auf einen Wert in einem gewünschten Wertebereich gesteuert werden. Auf diese Weise können die Dichte sowie die Homogenität der geblähten Sandkörner zumindest grob geregelt werden.

Analog ist es bei einer besonders bevorzugten Ausführungsform der erfindungsgemäßen Vorrichtung vorgesehen, dass eine Regel- und Steuereinheit vorgesehen ist, die so ausgelegt ist, dass zur Regelung der Dichte der geblähten Sandkörner die Leistung des mindestens einen Heizelements einer letzten Heizzone gesteuert wird. Es kann sich dabei um dieselbe Regel- und Steuereinheit handeln, die auch für die Temperatursteuerung eingesetzt wird. Die Regel- und Steuereinheit ist mit den Mitteln zur Bestimmung der Dichte verbunden sowie mit zumindest dem mindestens einen Heizelement der letzten Heizzone.

Durch Einstellung einer Temperatur bzw. eines Temperaturprofils in den Heizzonen entlang der Förderstrecke kann jener Ort bzw. Bereich der Förderstrecke, wo das isenthalpe Blähen - und damit der Temperatursturz - stattfindet, zumindest grob eingestellt werden. Insbesondere kann das Blähen zum Ende der Förderstrecke hin verschoben werden. Insbesondere kann die Regelung so erfolgen, dass das Blähen unmittelbar vor der letzten Heizzone stattfindet. Entsprechend ist es bei einer bevorzugten Ausführungsform des erfindungsgemäßen Verfahrens vorgesehen, dass zur Regelung einer Position der detektierten ersten Verringerung der Temperatur des Materials bis auf die Leistung des mindestens einen Heizelements einer letzten Heizzone die Leistungen der Heizelemente aller Heizzonen gesteuert werden. D.h. die Leistungen der Heizelemente aller Heizzonen, außer der letzten Heizzone, werden auf bestimmte gewünschte Werte oder auf Werte in bestimmten gewünschten Wertebereichen gesteuert.

Analog ist es bei einer bevorzugten Ausführungsform der erfindungsgemäßen Vorrichtung vorgesehen, dass die Regel- und Steuereinheit so ausgelegt ist, dass zur Regelung einer Position der detektierten ersten Verringerung der Temperatur des Materials bis auf die Leistung des mindestens einen Heizelements einer letzten Heizzone die Leistungen der Heizelemente aller Heizzonen gesteuert werden.

Alternativ oder zusätzlich kann jedoch auch die Materialeintrittstemperatur gesteuert werden, um die Position des Temperatursturzes entlang der Förderstrecke zu beeinflussen. Eine extrem feine Einstellung dieser Position ist somit möglich. Die Materialeintrittstemperatur kann insbesondere durch geeignete Wahl der ersten und/oder zweiten erhöhten Temperatur eingestellt werden. Daher ist es bei einer bevorzugten Ausführungsform des erfindungsgemäßen Verfahrens vorgesehen, dass zur Regelung der Position der detektierten ersten Verringerung der Temperatur des Materials die erste erhöhte Temperatur und/oder die zweite erhöhte Temperatur gesteuert werden.

Analog ist es bei einer bevorzugten Ausführungsform der erfindungsgemäßen Vorrichtung vorgesehen, dass die Regel- und Steuereinheit so ausgelegt ist, dass zur Regelung der Position der detektierten ersten Verringerung der Temperatur des Materials die erste erhöhte Temperatur und/oder die zweite erhöhte Temperatur gesteuert werden.

Bei einer bevorzugten Ausführungsform des erfindungsgemäßen Verfahrens ist vorgesehen, dass zur Regelung der Dichte und/oder Größe der geblähten Sandkörner die erste erhöhte Temperatur und/oder die zweite erhöhte Temperatur gesteuert werden. D.h. die erste und/oder zweite erhöhte Temperatur werden so gesteuert, dass sie gewünschte Werte annehmen oder Werte in gewünschten Wertebereichen. Hierdurch lässt sich nicht nur der Punkt bzw. der Bereich entlang der Förderstrecke, wo das Blähen erfolgt, besonders fein verschieben, insbesondere zum Ende der Förderstrecke hin, sondern auf diese Weise lassen sich auch die Dichte und/oder Größe sowie die Homogenität der geblähten Sandkörner besonders fein regeln. Dabei wird die Dichte und/oder Größe vorzugsweise als Regelgröße verwendet.

Analog ist es bei einer bevorzugten Ausführungsform der erfindungsgemäßen Vorrichtung vorgesehen, dass eine Regel- und Steuereinheit vorgesehen ist, die so ausgelegt ist, dass zur Regelung der Dichte und/oder Größe der geblähten Sandkörner die erste erhöhte Temperatur und/oder die zweite erhöhte Temperatur gesteuert werden. Es kann sich um dieselbe Regel- und Steuereinheit handeln, die auch für die Temperatursteuerung eingesetzt wird; die Regel- und Steuereinheit ist mit den Mitteln zur Bestimmung der Dichte und/oder Größe verbunden sowie mit dem mindestens einen Mittel zum Anwärmen des Materials auf die erste erhöhte Temperatur und/oder mit dem mindestens einen Mittel zum Anwärmen der Luftmenge auf die zweite erhöhte Temperatur.

Gemäß dem oben Gesagten kann auch die Homogenität der Dichte und/oder Größe als Regelgröße herangezogen werden, wobei die erste und/oder zweite erhöhte Temperatur so gesteuert werden, dass sie gewünschte Werte annehmen oder Werte in gewünschten Wertebereichen. Entsprechend ist es bei einer bevorzugten Ausführungsform des erfindungsgemäßen Verfahrens vorgesehen, dass zur Regelung der Homogenität der Dichte und/oder Größe der geblähten Sandkörner die erste erhöhte Temperatur und/oder die zweite erhöhte Temperatur gesteuert werden.

Analog ist es bei einer bevorzugten Ausführungsform der erfindungsgemäßen Vorrichtung vorgesehen, dass eine Regel- und Steuereinheit vorgesehen ist, die so ausgelegt ist, dass zur Regelung der Homogenität der Dichte und/oder Größe der geblähten Sandkörner die erste erhöhte Temperatur und/oder die zweite erhöhte Temperatur gesteuert werden. Es kann sich um dieselbe Regel- und Steuereinheit handeln, die auch für die Temperatursteuerung (zum Anwärmen des Materials auf die Materialeintrittstemperatur) eingesetzt wird; die Regel- und Steuereinheit ist mit den Mitteln zur Bestimmung der Dichte und/oder Größe verbunden, um die Homogenität der Dichte und/oder Größe zu bestimmen, sowie mit dem mindestens einen Mittel zum Anwärmen des Materials auf die erste erhöhte Temperatur und/oder mit dem mindestens einen Mittel zum Anwärmen der Luftmenge auf die zweite erhöhte Temperatur.

Bei einer bevorzugten Ausführungsform des erfindungsgemäßen Verfahrens ist vorgesehen, dass die Materialeintrittstemperatur mindestens 30%, vorzugsweise mindestens 90%, der kritischen Temperatur ist. Analog ist es bei einer bevorzugten Ausführungsform der erfindungsgemäßen Vorrichtung vorgesehen, dass die Materialeintrittstemperatur mindestens 30%, vorzugsweise mindestens 90%, der kritischen Temperatur ist. Auf diese Weise lassen sich in der Praxis besonders einfach bzw. zuverlässig homogene Expansionsresultate erzielen.

Um insbesondere beim Blähen von Perlit- und/oder Obsidiansand besonders einfach bzw. zuverlässig homogene Expansionsresultate erzielen zu können, ist bei einer bevorzugten Ausführungsform des erfindungsgemäßen Verfahrens vorgesehen, dass die Materialeintrittstemperatur mindestens 240°C, vorzugsweise mindestens 720°C, ist. Analog ist es bei einer bevorzugten Ausführungsform der erfindungsgemäßen Vorrichtung vorgesehen, dass die Materialeintrittstemperatur mindestens 240°C, vorzugsweise mindestens 720°C, ist.

Bei einer bevorzugten Ausführungsform des erfindungsgemäßen Verfahrens ist vorgesehen, dass zusätzlich eine Zuluft von unten in den Ofenschacht eingeblasen und/oder eingesaugt wird, um die Förderung des Materials entlang der Förderstrecke zu unterstützen, wobei die Zuluft vor deren Eintritt in den Ofenschacht auf eine weitere erhöhte Temperatur vorgewärmt wird. Vorzugsweise ist auch die weiter erhöhte Temperatur größer als die Umgebungstemperatur und kleiner als die kritische Temperatur. Da der Rohsand von unten aufgegeben wird, muss er gegen die Schwerkraft durch den Ofenschacht gefördert werden, und dies geschieht sozusagen pneumatisch, wobei die Zuluft diese pneumatische Förderung unterstützt. Im Ofenschacht wird das Material schnell erwärmt. Die Vorwärmung der Zuluft verhindert, dass ein, insbesondere zu großer, Teil der durch das Anwärmen erzeugten Erwärmung des Materials durch Konvektion an die Zuluft übertragen wird. Indem der Rohsand und die Zuluft jeweils vor Eintritt in den Ofenschacht angewärmt bzw. vorgewärmt werden, kann somit ein kürzerer Ofenschacht gebaut bzw. wesentlich feinfühliger geregelt werden.

Analog ist es bei einer bevorzugten Ausführungsform der erfindungsgemäßen Vorrichtung vorgesehen, dass mindestens ein Mittel vorgesehen ist, um zur Unterstützung der Förderung des Materials entlang der Förderstrecke Zuluft von unten in den Ofenschacht einzublasen und/oder einzusaugen, und dass mindestens ein Mittel zum Vorwärmen der Zuluft auf eine weitere erhöhte Temperatur vorgesehen ist, welches dem Ofenschacht vorgeschaltet ist. Vorzugsweise sind Mittel zum Einblasen (z.B. ein Ventilator oder Gebläse oder Kompressor) dem Ofenschacht vorgeschaltet und Mittel zum Einsaugen (z.B. ein Ventilator oder Gebläse) dem Ofenschacht nachgeschaltet, wobei die Zuluft in jedem Fall von unten in den Ofenschacht eintritt.

Bei einer besonders bevorzugten Ausführungsform des erfindungsgemäßen Verfahrens ist vorgesehen, dass die vorgewärmte Zuluft vor deren Eintritt in den Ofenschacht dem in der Luftmenge dispergierten Material beigemengt wird. Dies gestattet eine besonders einfache technische bzw. konstruktive Realisierung. Vorzugsweise ist die Zuluft dabei auf eine Temperatur vorgewärmt, die mindestens so groß ist wie jene des dispergierten Materials. Dies verhindert ein Abkühlen des Materials aufgrund der Beimengung der Zuluft.

Analog ist es bei einer bevorzugten Ausführungsform der erfindungsgemäßen Vorrichtung vorgesehen, dass das mindestens eine Mittel zum Einblasen und/oder Einsaugen der Zuluft ein Rohr umfasst, welches Rohr zumindest abschnittsweise einerseits zwischen der Feststoff/Luft-Düse und dem Ofenschacht geschaltet ist und andererseits zwischen dem mindestens einen Mittel zum Vorwärmen der Zuluft und dem Ofenschacht. D.h. die Anordnung des Rohrs ist so, dass über dieses die vorgewärmte Luft in einen Bereich zwischen der Feststoff/Luft-Düse und dem Ofenschacht bzw. dem unteren Ende des Ofenschachts gefördert werden kann.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:

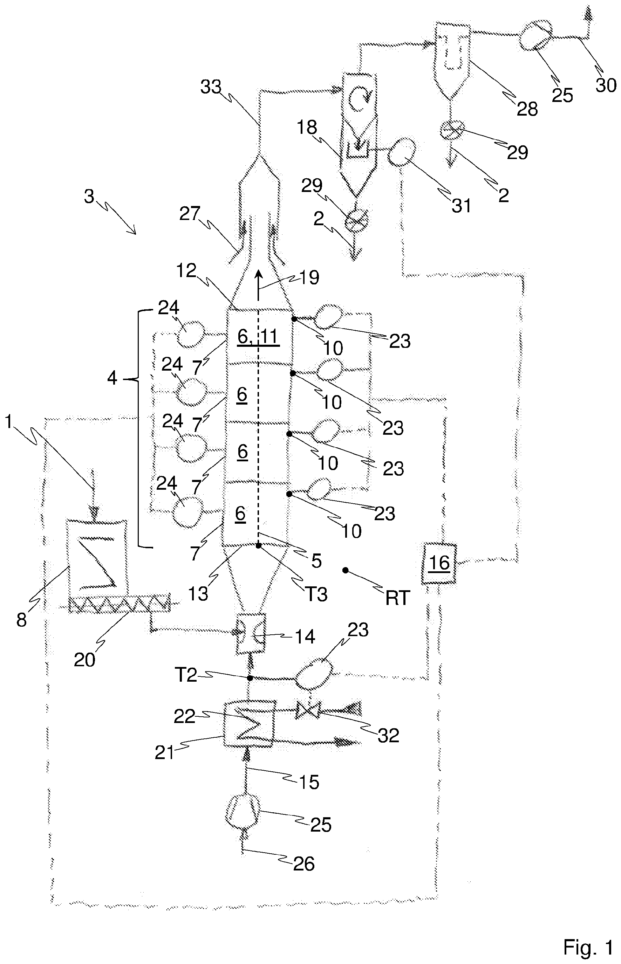

- Fig. 1: ein Fließschema einer ersten Ausführungsform einer erfindungsgemäßen Vorrichtung zur Durchführung einer ersten Ausführungsform eines erfindungsgemäßen Verfahrens, wobei zu blähendes Material mittels beheizter Druckluft angewärmt wird, bevor es in einen Ofenschacht von unten eintritt, wobei die Druckluft eine Luftmenge ausbildet, in der das Material dispergiert wird, bevor es in den Ofenschacht eintritt

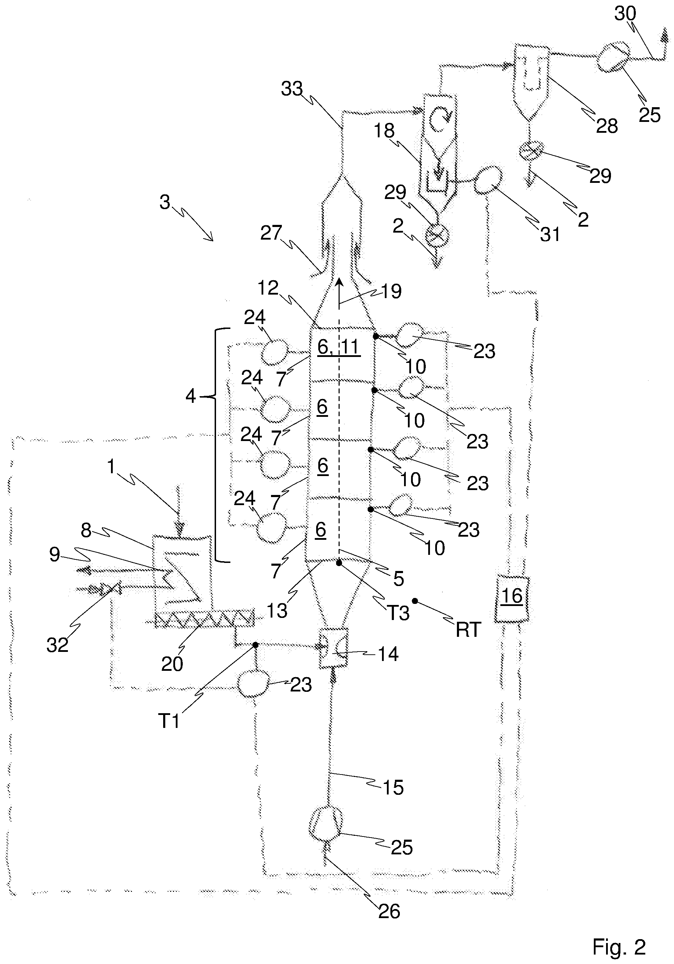

- Fig. 2: ein Fließschema einer zweiten Ausführungsform der erfindungsgemäßen Vorrichtung zur Durchführung einer zweiten Ausführungsform des erfindungsgemäßen Verfahrens, wobei das zu blähende Material mittels eines beheizten Vorratsbehälters angewärmt wird, bevor es dispergiert wird und in weiterer Folge in den Ofenschacht eintritt

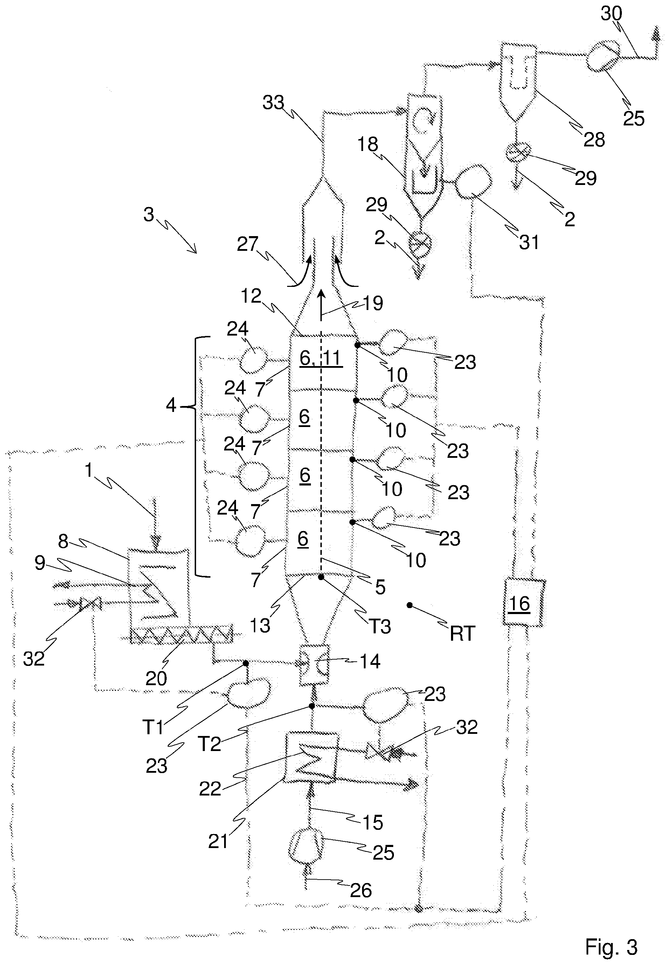

- Fig. 3: ein Fließschema einer dritten Ausführungsform der erfindungsgemäßen Vorrichtung zur Durchführung einer dritten Ausführungsform des erfindungsgemäßen Verfahrens, wobei das zu blähende Material sowohl mittels der beheizten Druckluft als auch mittels des beheizten Vorratsbehälters angewärmt wird, bevor es in den Ofenschacht eintritt

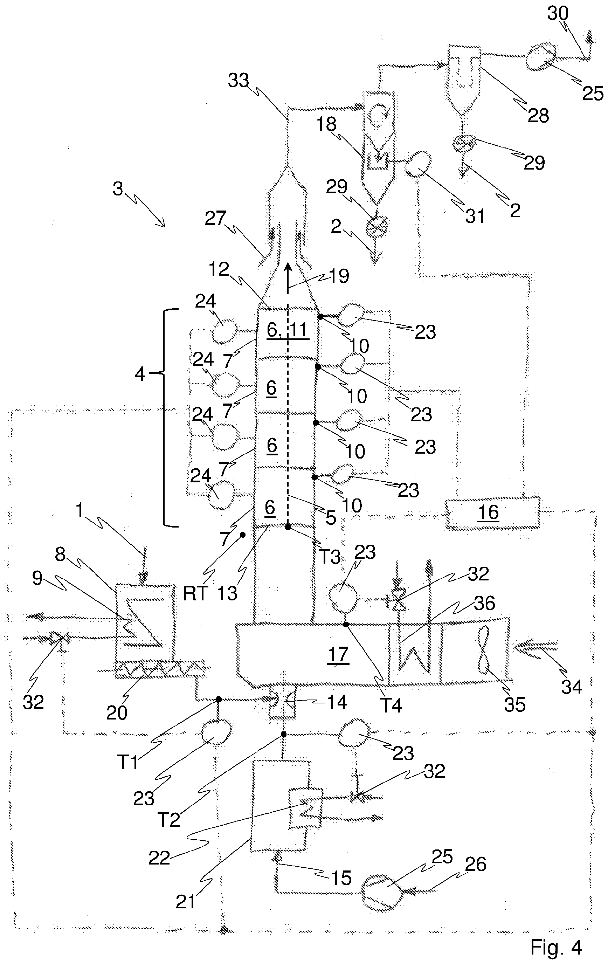

- Fig. 4: ein Fließschema einer vierten Ausführungsform der erfindungsgemäßen Vorrichtung zur Durchführung einer vierten Ausführungsform des erfindungsgemäßen Verfahrens, wobei gegenüber der dritten Ausführungsform gemäß Fig. 3 zusätzlich vorgewärmte Zuluft in den Ofenschacht von unten eingeblasen wird

### WEGE ZUR AUSFÜHRUNG DER ERFINDUNG

Fig. 1 zeigt eine schematische Darstellung einer ersten Ausführungsform einer erfindungsgemäßen Vorrichtung, mit welcher eine erste Ausführungsform eines erfindungsgemäßen Verfahrens zur Herstellung von geblähten Mikrosphären 2 bzw. von geblähtem Granulat 2 durchgeführt werden kann. Ausgangsmaterial für die geblähten Mikrosphären 2 ist ein sandförmiges bzw. staubförmiges, insbesondere mineralisches, Material mit einem Treibmittel. Im gezeigten Ausführungsbeispiel ist Perlitsand 1 als Material angenommen, wobei in Perlit Wasser gebunden ist, das beim Blähprozess als Treibmittel fungiert. Der Durchmesser der Perlitsandkörner 1 ist typischerweise kleiner als 100 µm.

Zur Durchführung des Blähprozesses umfasst die erfindungsgemäße Vorrichtung einen Ofen 3 mit einem Ofenschacht 4, der sich im Wesentlichen senkrecht - d.h. eine geringfügige Abweichung von der Senkrechten, z.B. aufgrund herstellungstechnischer Fehlertoleranzen, ist möglich - von einem unteren Ende 13 zu einem oberen Ende 12 von unten nach oben erstreckt. Zwischen den Enden 13, 12 verläuft eine Förderstrecke 5, die in Fig. 1 durch eine strichlierte Linie angedeutet ist. Diese Linie markiert gleichzeitig ein radiales Zentrum des Ofenschachts 4.

Im Ofenschacht 4 sind mehrere übereinander bzw. in einer Förderrichtung 19 gesehen nacheinander angeordnete Heizzonen 6 vorgesehen, durch die die Förderstrecke 5 führt. D.h. die Heizzonen 6 definieren den Ofenschacht 4 bzw. ist unter Ofenschacht 4 jener Abschnitt des Ofens 3 zu verstehen, in dem die Heizzonen 6 angeordnet sind.

Jede Heizzone 6 ist mit mindestens einem unabhängig steuerbaren Heizelement 7 versehen, bei welchem es sich insbesondere um ein elektrisches Heizelement 7 handeln kann. Mittels der Heizelemente 7 kann der Perlitsand 1 im Ofen 3 bzw. Ofenschacht 4 auf eine kritische Temperatur gebracht werden, bei welcher die Oberflächen der Perlitsandkörner 1 plastisch werden und die Perlitsandkörner 1 aufgrund des Treibmittels - hier Wasserdampf - gebläht werden.

Der Perlitsand 1 wird gemeinsam mit einer Luftmenge am unteren Ende 13 in den Ofen 3 bzw. Ofenschacht 4 aufgegeben und in Richtung oberes Ende 12, also von unten nach oben, geblasen. Für dieses Einblasen ist eine Feststoff/Luft-Düse 14 vorgesehen. Dieser wird einerseits der Perlitsand 1, der in einem Vorratsbehälter 8 aufbewahrt ist, über eine Dosierschnecke 20 zugeführt. Andererseits wird der Feststoff/Luft-Düse 14 Druckluft 15 aus einem Druckluftbehälter 21 zugeführt. Die Druckluft 15 wird dabei mittels eines Gebläses/Kompressors 25, dem über eine Luftzufuhr 26 Luft zugeführt wird, erzeugt und in den Druckluftbehälter 21 geblasen.

Die Feststoff/Luft-Düse 14 stellt sicher, dass sich eine von unten nach oben strömende Luftströmung ausbildet, mittels welcher der Perlitsand 1 von unten nach oben entlang der Förderstrecke 5 in Förderrichtung 19 gefördert wird. Durch die Förderung von unten nach oben wird grundsätzlich verhindert, dass entstehende Auftriebskräfte dazu führen, dass die Verweilzeit des Perlitsands 1 bzw. des geblähten Granulats 2 im Ofenschacht 4 unkontrolliert groß wird. Gleichzeitig kann sichergestellt werden, dass das Blähen erst in der oberen Hälfte, vorzugsweise im obersten Drittel des Ofenschachts 4 bzw. der Förderstrecke 5 erfolgt, wodurch ein Anbacken des Perlitsands 1 bzw. des geblähten Granulats 2 an einer Innenwand des Ofenschachts 4 vermieden werden kann sowie ein Verkleben einzelner Körner des Perlitsands 1 bzw. des geblähten Granulats 2 untereinander.

Typischerweise hat der Perlitsand 1 unmittelbar vor seiner Blähung ca. 780°C. Da es sich bei dem Blähvorgang, bei dem sich die Perlitsandkörner 1 ausdehnen, um einen isenthalpen Prozess handelt, kühlt der Perlitsand 1 beim Blähen ab, typischerweise auf ca. 590°C, was auch als Temperatursturz bezeichnet wird. Je nach Material beträgt der Temperatursturz mindestens 20°C, vorzugsweise mindestens 100°C. Eine Detektion des Temperatursturzes bzw. die Detektion der Position, an welcher der Temperatursturz im Ofenschacht 4 auftritt, ermöglicht es, die Heizelemente 7 entlang der verbleibenden Förderstrecke 5 gezielt regeln zu können, um insbesondere die Oberflächenstruktur bzw. Oberflächeneigenschaften des geblähten Granulats 2 zu beeinflussen.

Entsprechend ist entlang der Förderstrecke 5 eine Vielzahl von Positionen 10 für eine Temperaturmessung vorgesehen, um die Position des Temperatursturzes bzw. die Position einer ersten Verringerung der Temperatur des Materials - aufgrund des isenthalpen Blähens - bestimmen zu können. In den dargestellten Ausführungsbeispielen sind zur Temperaturmessung Temperatursensoren 23 vorgesehen, die mit einer Regel- und Steuereinheit 16 verbunden sind (angedeutet durch die strichlierten Linien) und deren Daten von der Regel- und Steuereinheit 16 ausgewertet werden.

Es ist aber auch denkbar, keine absolute Temperaturmessung durchzuführen, sondern die Leistungsaufnahme der Heizelemente 7 zu bestimmen bzw. zu bestimmen, wie sich diese Leistungsaufnahme entlang der Förderstrecke 5 ändert. Die entsprechenden Leistungsmessungen können mittels Strom- bzw. Leistungsmessgeräten 24, die in den dargestellten Ausführungsformen für die Heizelemente 7 der Heizzonen 6 vorgesehen sind, durchgeführt werden. Die Strom- bzw. Leistungsmessgeräte 24 sind in den dargestellten Ausführungsformen entsprechend mit der Regel- und Steuereinheit 16 verbunden (angedeutet durch die strichlierten Linien), welche die Daten der Strom- bzw. Leistungsmessgeräte 24 auswerten kann.

Unmittelbar nach dem Blähvorgang und dem damit einhergehenden Temperatursturz ist die Temperaturdifferenz zwischen dem geblähten Granulat 2 und den Heizelementen 7 deutlich größer als zwischen dem Perlitsand 1 und den Heizelementen 7 unmittelbar vor dem Blähvorgang. Entsprechend nimmt auch der Wärmefluss zu. D.h. die festgestellte Änderung des Wärmeflusses bzw. der Leistungsaufnahme der Heizelemente 7 von einer Heizzone 6 zur nächsten ist eine Zunahme, wohingegen sich aufgrund der sukzessiven Erwärmung des Perlitsands 1 vor dem Blähvorgang die Änderung der Leistungsaufnahme entlang der Förderstrecke 5 eine Abnahmen ist.

Zur Regelung, insbesondere zur Regelung entlang der nach dem Temperatursturz verbleibenden Förderstrecke 5 sind auch die Heizelemente 7 mit der Regel- und Steuereinheit 16 verbunden (angedeutet durch die strichlierten Linien), sodass eine Zunahme der Materialtemperatur entlang der verbleibenden Förderstrecke 5 auf oder über die kritische Temperatur gezielt verhindert oder ermöglicht werden kann.

Die derart erzeugten geblähten Mikrosphären 2 haben typischerweise einen Durchmesser kleiner gleich 150 µm. Um im Endprodukt tatsächlich einzelne geblähte Mikrosphären 2 zu erhalten und keine zu großen Partikel in Form von Agglomeraten von geblähten Mikrosphären 2, muss verhindert werden, dass der im Ofenschacht 4 befindliche Perlitsand 1 Agglomerate bildet, die dann zu entsprechenden Agglomeraten von geblähten Mikrosphären 2 gebläht werden. Eine Agglomeration des Perlitsands 1 wird durch Feuchtigkeit begünstigt. Daher wird der Perlitsand 1 typischerweise aufbereitet, bevor er in den Vorratsbehälter 8 gelangt, wobei die Aufbereitung einen Trocknungsprozess beinhaltet. Darüberhinaus kann ein Rührwerk im Vorratsbehälter 8 vorgesehen sein, um Brückenbildung zwischen den Perlitsandkörnern 1 zu verhindern. Da jedoch selbst im trockenen Zustand eine Förderung des feinstaubigen Perlitsands 1 kaum ohne Bildung von Agglomeraten möglich ist, wird der Perlitsand 1 in der Luftmenge, mit der er in den Ofenschacht 4 aufgegeben wird, mittels der Feststoff/Luft-Düse 14 dispergiert.

Nach dem Blähvorgang wird das geblähte Granulat 2 gemeinsam mit der im Ofenschacht 4 erwärmten Luft am oberen Ende 12 des Ofenschachts 4 ausgetragen. D.h. die geblähten Mikrosphären 2 liegen in einem Gas-Material-Strom 33 vor.

Dem Gas-Material-Strom 33 wird dabei, nachdem dieser aus dem Ofenschacht 4 ausgetreten ist, Kühlluft 27 beigemengt. Hierdurch wird das geblähte Granulat 2 abgekühlt, vorzugsweise auf eine Verarbeitungstemperatur kleiner gleich 100°C, was die weitere Handhabung des geblähten Granulats 2, insbesondere bei dessen Weiterverarbeitung erleichtert.

Um ein verbessertes Expansionsergebnis, insbesondere mit einer erhöhten Gleichförmigkeit, erzielen zu können, ist es erfindungsgemäß vorgesehen, dass der Perlitsand 1 vor dessen Eintritt in den Ofenschacht 4 angewärmt wird, sodass der Perlitsand 1 unmittelbar vor dessen Eintritt in den Ofenschacht 4 eine Materialeintrittstemperatur T3 aufweist, die kleiner ist als die kritische Temperatur und größer als eine Umgebungstemperatur RT. Wie aus den Darstellungen der Fig. 1 bis Fig. 4 hervorgeht, ist die Umgebungstemperatur RT bei den gezeigten Ausführungsformen in unmittelbarer Nähe zu jenem Bereich gemessen, wo der Perlitsand 1 in den Ofenschacht 4 eintritt.

Vorzugsweise ist die Materialtemperatur T3 mindestens 30%, besonders bevorzugt mindestens 90%, der kritischen Temperatur. Insbesondere kann die Materialeintrittstemperatur T3 mindestens 240°C, vorzugsweise mindestens 720°C, betragen
Durch die Höhe der Anwärmung lässt sich die vom Perlitsand 1 auf die Luftmenge übertragene Wärmemenge und damit der Expansionszeitpunkt sehr feinfühlig - auch innerhalb einer Heizzone 7 - regeln. Eine Erhöhung der Materialeintrittstemperatur T3 bewirkt dabei ein früheres Eintreten der Expansion und führt für gewöhnlich auch zu leichteren geblähten Granulaten 2. Eine Verringerung der Materialeintrittstemperatur T3 führt zu gegenteiligen Effekten. Ein weiterer Vorteil ist, dass durch die reduzierte Wärmeabgabe des Perlitsands 1 an die Luftmenge im Ofenschacht 4 eine homogenere Temperaturverteilung im zu blähenden Perlitsand 1 und damit ein gleichmäßiger geblähtes Granulat 2 erzielt werden.

Im Ausführungsbeispiel der Fig. 1 ist als mindestens ein dem Ofenschacht 4 vorgeschaltetes Mittel zum Anwärmen des Perlitsands 1 auf die Materialeintrittstemperatur T3 beheizte Druckluft 15 vorgesehen, die die auf eine zweite erhöhte Temperatur T2 angewärmte Luftmenge ausbildet. Zum Bereitstellen der auf die zweite erhöhte Temperatur T2 angewärmten Luftmenge ist eine Heizung 22 des Druckluftbehälters 21 vorgesehen. Die Heizung 22 ist mittels eines steuerbaren Ventils 32, welches von der Regel- und Steuereinheit 16 angesteuert werden kann, steuerbar. Die zweite erhöhte Temperatur T2 der angewärmten Luftmenge wird mittels eines Temperatursensors 23, der ebenfalls mit der Regel- und Steuereinheit 16 verbunden ist (angedeutet durch die strichlierte Linie), überwacht, sodass die Regel- und Steuereinheit 16 die Heizung 22 mittels des steuerbaren Ventils 32 so regeln kann, dass die gewünschte zweite erhöhte Temperatur T2 erreicht wird. Der Temperatursensor 23 misst im dargestellten Ausführungsbeispiel die zweite erhöhte Temperatur T2 der Luftmenge unmittelbar vor der Feststoff/Luft-Düse 14, also zwischen der Feststoff/Luft-Düse 14 und dem Druckluftbehälter 21. Die so angewärmte Luftmenge erwärmt den Perlitsand 1 beim Dispergieren auf die Materialeintrittstemperatur T3, die im Ausführungsbeispiel der Fig. 1 typischerweise kleiner als die zweite erhöhte Temperatur T2 sein wird.

Im zweiten Ausführungsbeispiel gemäß Fig. 2 ist kein Druckluftbehälter 21 - und damit auch keine Heizung 22 des Druckluftbehälters 21 - vorgesehen, sondern wird die die Luftmenge ausbildende Druckluft 15 mittels des Gebläses/Kompressors 25 direkt der Feststoff/Luft-Düse 14 zugeführt. Um den Perlitsand 1 auf die Materialeintrittstemperatur T3 anzuwärmen, ist stattdessen eine Heizung 9 im Vorratsbehälter 8 vorgesehen, um den im Vorratsbehälter 8 befindlichen Perlitsand 1 anzuwärmen. Das Anwärmen erfolgt dabei so, dass der Perlitsand 1 vor Eintritt in die Feststoff/Luft-Düse 14 bzw. vor dem Dispergieren eine erste erhöhte Temperatur T1 aufweist.

Diese erste erhöhte Temperatur T1 ist kleiner als die kritische Temperatur und größer als die Umgebungstemperatur RT und kann mittels eines der Feststoff/Luft-Düse 14 vorgeschalteten Temperatursensors 23 gemessen werden. Dieser Temperatursensor 23, der im dargestellten Ausführungsbeispiel die erste erhöhte Temperatur T1 des Perlitsands 1 zwischen der Dosierschnecke 20 und der Feststoff/Luft-Düse 14 misst, ist mit der Regel- und Steuereinheit 16 verbunden (angedeutet durch die strichlierte Linie). Auch die Heizung 9 des Vorratsbehälters 8 weist ein steuerbares Ventil 32 auf, das mit der Regel- und Steuereinheit 16 verbunden ist (angedeutet durch die strichlierte Linie) und von dieser gesteuert wird. Die erste erhöhte Temperatur T1 des angewärmten Perlitsands 1 wird mittels des Temperatursensors 23 von der Regel- und Steuereinheit 16 überwacht, sodass die Regel- und Steuereinheit 16 die Heizung 9 mittels des steuerbaren Ventils 32 so regeln kann, dass die gewünschte erste erhöhte Temperatur T1 erreicht wird. Beim Dispergieren mit der (nicht angewärmten) Luftmenge kühlt der Perlitsand 1 durch Wärmeübertragung auf die Luftmenge typischerweise etwas ab, sodass dessen Materialeintrittstemperatur T3 im Ausführungsbeispiel der Fig. 2 typischerweise etwas geringer ist als die erste erhöhte Temperatur T1.

Das dritte Ausführungsbeispiel gemäß Fig. 3 stellt gewissermaßen eine Kombination der Ausführungsbeispiele aus Fig. 1 und Fig. 2 dar. Hier wird nämlich einerseits die Luftmenge mittels der Heizung 22 des Druckluftbehälters 21 angewärmt, sodass die Luftmenge unmittelbar vor Eintritt in die Feststoff/Luft-Düse 14 die zweite erhöhte Temperatur T2 aufweist. Andererseits wird auch der Perlitsand 1 im Vorratsbehälter 8 mittels der Heizung 9 angewärmt, sodass der Perlitsand 1 unmittelbar vor Eintritt in die Feststoff/LuftDüse 14 die erste erhöhte Temperatur T1 aufweist. Eine besonders genaue Einstellung der gewünschten Materialeintrittstemperatur T3 ist die Folge.

Vorzugsweise ist dabei der Absolutbetrag einer Differenztemperatur, die die Differenz zwischen der ersten erhöhten Temperatur T1 und der zweiten erhöhten Temperatur T2 ist, höchstens 50%, bevorzugt höchstens 30%, besonders bevorzugt höchstens 10%, der ersten erhöhten Temperatur T1.

Im vierten Ausführungsbeispiel gemäß Fig. 4 ist gegenüber dem dritten Ausführungsbeispiel gemäß Fig. 3 zusätzlich die Zuführung einer Zuluft 34 vorgesehen, die von unten in den Ofenschacht 4 eingeblasen wird, um die Förderung des Perlitsands 1 bzw. des geblähten Granulats 2 entlang der Förderstrecke 5 zu unterstützen, wobei die Zuluft 34 vor deren Eintritt in den Ofenschacht 4 auf eine weitere erhöhte Temperatur T4 vorgewärmt wird. Vorzugsweise ist auch die weiter erhöhte Temperatur T4 größer als die Umgebungstemperatur RT und kleiner als die kritische Temperatur. Die Vorwärmung der Zuluft 34 verhindert, dass ein, insbesondere zu großer, Teil der durch das Anwärmen verursachten Erwärmung des Perlitsands 1 durch Konvektion an die Zuluft 34 übertragen wird. Indem der Perlitsand 1 und die Zuluft 34 jeweils vor Eintritt in den Ofenschacht 4 angewärmt bzw. vorgewärmt werden, kann somit ein kürzerer Ofenschacht 4 gebaut bzw. wesentlich feinfühliger geregelt werden.

Als Mittel zum Zuführen bzw. Einblasen der Zuluft 34 sind im Ausführungsbeispiel der Fig. 4 ein Ventilator 35 sowie ein Rohr 17 vorgesehen. Mittels des Ventilators 35 wird die Zuluft 34 ins Rohr 17 geblasen, wobei im Rohr 17 eine Heizung 36 angeordnet ist, um die Zuluft 34 auf die weitere erhöhte Temperatur T4 vorzuwärmen. Der Ventilator 35 und die Heizung 36 sind dem Ofenschacht 4 also vorgeschaltet. Die Heizung 36 umfasst ein steuerbares Ventil 32, das mit der Regel- und Steuereinheit 16 verbunden ist (angedeutet durch die strichlierten Linien) und von dieser gesteuert wird. Die weitere erhöhte Temperatur T4 der vorgewärmten Zuluft 34 wird mittels eines Temperatursensors 23 gemessen, vorzugsweise an einer Stelle im Rohr 17, die der Heizung 36 nachgeschaltet ist. Auch dieser Temperatursensor 23 ist mit der Regel- und Steuereinheit 16 verbunden (angedeutet durch die strichlierte Linie), die dessen Signale auswertet, um die Heizung 36 mittels des steuerbaren Ventils 32 so zu steuern, dass die weitere erhöhte Temperatur T4 der vorgewärmten Zuluft 34 einen gewünschten Wert aufweist.

Im dargestellten Ausführungsbeispiel mündet das Rohr 17 in einen Bereich, der unmittelbar an die Feststoff/Luft-Düse 14 anschließt. D.h. das Rohr 17 ist zumindest abschnittsweise einerseits zwischen der Feststoff/Luft-Düse 14 und dem Ofenschacht 4 geschaltet und andererseits zwischen der Heizung 36 und dem Ofenschacht 4, um die vorgewärmte Zuluft 34 in einen Bereich zwischen der Feststoff/Luft-Düse 14 und dem unteren Ende 13 des Ofenschachts 4 fördern zu können. Auf diese Weise wird die vorgewärmte Zuluft 34 dem dispergierten Perlitsand 1 beigemengt. Vorzugsweise wird die weitere erhöhte Temperatur T4 der vorgewärmten Zuluft 34 dabei so gewählt, dass diese mindestens so groß ist wie jene des dispergierten Perlitsands 1, um ein Abkühlen des Perlitsands 1 aufgrund der Beimengung der vorgewärmten Zuluft 34 zu verhindern. Entsprechend kann die gewünschte Materialeintrittstemperatur T3 hochpräzise eingestellt werden.

In allen gezeigten Ausführungsbeispielen wird der Gas-Material-Strom 33 einer Dichtemesseinrichtung 18 zugeführt, wo zumindest ein Teil des im Gas-Material-Strom 33 mitgeführten geblähten Granulats 2 abgeschieden wird. Die Dichtemesseinrichtung 18 weist einen Sensor 31 auf, der in an sich bekannter Weise, z.B. optisch, die Dichte dieses geblähten Granulats 2 bestimmt. Über eine Zellradschleuse 29 wird dieses geblähte Granulat 2 aus der Dichtemesseinrichtung 18 abgeführt und kann z.B. einem Silo (nicht dargestellt) zugeführt werden.

Weiters ist ein der Dichtemesseinrichtung 18 nachgeschalteter Filter 28 vorgesehen, um das noch im Gas-Material-Strom 33 befindliche geblähte Granulat 2 möglichst vollständig abzuscheiden. Da das geblähte Granulat 2 bzw. der Gas-Material-Strom 33 durch die Kühlluft 27, insbesondere auf eine Temperatur kleiner gleich 120°C, abgekühlt ist, ist die Verwendung von kostengünstigen, insbesondere reinigbaren, Filterhosen im Filter 28 möglich. Auch dieses geblähte Granulat 2 wird über eine Zellradschleuse 29 aus dem Filter 28 abgeführt und kann z.B. einem Silo (nicht dargestellt) zugeführt werden.

Eine durch den Filter 28 gereinigte Abluft 30 wird über ein dem Filter 28 nachgeschaltetes Gebläse 25 an die Atmosphäre abgegeben.

Die Bestimmung der Dichte des geblähten Granulats 2 erlaubt es, den Expansions- bzw. Blähprozess noch feinfühliger regeln zu können. Durch die Messung kann das Expansionsresultat laufend kontrolliert werden und können Verfahrensparameter sofort angepasst werden, wenn das tatsächliche Expansionsresultat vom gewünschten Expansionsresultat abweicht. Indem die Regel- und Steuereinheit 16 auch mit dem Sensor 31 verbunden ist (angedeutet durch die strichlierte Linie) und dessen Daten laufend auswertet, kann mittels der Regel- und Steuereinheit 16 die Dichte der geblähten Mikrosphären 2 gezielt geregelt werden, um die gewünschte Qualität des Expansionsresultats zu gewährleisten.

Insbesondere kann zur Regelung der Dichte des geblähten Granulats 2 die Leistung des mindestens einen Heizelements 7 einer letzten Heizzone 11 gesteuert werden, wobei dessen Leistung vorzugsweise auf einen gewünschten Wert oder einen Wert in einem gewünschten Wertebereich gesteuert wird. Hierdurch ist zumindest eine grobe Regelung der Dichte des geblähten Granulats 2 möglich.

Dabei werden mittels der oben beschriebenen Detektion des Temperatursturzes die Heizelemente 7 der Heizzonen 6 vor der letzten Heizzone 11 vorzugsweise so geregelt, dass der isenthalpe Blähprozess vor, insbesondere unmittelbar vor, der letzten Heizzone 11 stattfindet. D.h. die Detektion der Position des Temperatursturzes wird dazu verwendet, diese Position auf eine gewünschte Position entlang der Förderstrecke 5, nämlich auf eine Position vor, insbesondere unmittelbar vor, der letzten Heizzone 11, durch geeignete Ansteuerung der Heizelemente 7 mittels der Regel- und Steuereinheit 16 zumindest grob zu regeln.

Eine extrem feine Einstellung der Position des Temperatursturzes wird durch die Steuerung der Materialeintrittstemperatur T3 ermöglicht, wobei hierfür mittels der Regel- und Steuereinheit 16 die erste erhöhte Temperatur T1 und/oder die zweite erhöhte Temperatur T2 und/oder die weitere erhöhte Temperatur T4 geeignet gesteuert werden. Entsprechend können zur extrem feinen Regelung der Dichte des geblähten Granulats 2 die erste erhöhte Temperatur T1 und/oder die zweite erhöhte Temperatur T2 und/oder die weitere erhöhte Temperatur T4 mittels der Regel- und Steuereinheit 16 geeignet gesteuert werden.

Es sei bemerkt, dass völlig analog zur Bestimmung der Dichte des geblähten Granulats 2 auch dessen Homogenität bestimmt werden kann und in der Folge diese Homogenität als alternative oder zusätzliche Regelgröße herangezogen werden kann, um die gewünschte Qualität des Expansionsresultats bzw. des geblähten Granulats 2 zu gewährleisten.

### BEZUGSZEICHENLISTE

- 1: Perlitsand
- 2: Geblähtes Granulat / geblähte Mikrosphären
- 3: Ofen
- 4: Ofenschacht
- 5: Förderstrecke
- 6: Heizzone
- 7: Heizelement
- 8: Vorratsbehälter
- 9: Heizung des Vorratsbehälters
- 10: Position für Temperaturmessung entlang der Förderstrecke
- 11: Letzte Heizzone
- 12: Oberes Ende des Ofenschachts
- 13: Unteres Ende des Ofenschachts
- 14: Feststoff/Luft-Düse
- 15: Druckluft
- 16: Regel- und Steuereinheit
- 17: Rohr für Zuluft
- 18: Dichtemesseinrichtung
- 19: Förderrichtung
- 20: Dosierschnecke
- 21: Druckluftbehälter
- 22: Heizung des Druckluftbehälters
- 23: Temperatursensor
- 24: Strom- bzw. Leistungsmessgerät
- 25: Gebläse/Kompressor
- 26: Luftzufuhr
- 27: Kühlluft
- 28: Filter
- 29: Zellradschleuse
- 30: Gereinigte Abluft
- 31: Sensor der Dichtemesseinrichtung
- 32: Steuerbares Ventil
- 33: Gas-Material-Strom
- 34: Zuluft
- 35: Ventilator
- 36: Heizung für die Zuluft
- T1: Erste erhöhte Temperatur (des Materials)
- T2: Zweite erhöhte Temperatur (der Luftmenge)
- T3: Materialeintrittstemperatur
- T4: Weitere erhöhte Temperatur (der Zuluft)
- RT: Umgebungstemperatur

## Patentansprüche

1. Verfahren zur Herstellung eines geblähten Granulats (2) aus sandkornförmigem, mineralischem Material (1) mit einem Treibmittel, beispielsweise zur Herstellung eines geblähten Granulats aus Perlit- (1) oder Obsidiansand; wobei das Material (1) in einen Ofen (3) aufgegeben wird; wobei das Material (1) in einem im Wesentlichen senkrecht stehenden Ofenschacht (4) des Ofens (3) entlang einer Förderstrecke (5) durch mehrere, vertikal voneinander getrennt angeordnete Heizzonen (6) gefördert wird, wobei jede Heizzone (6) mit zumindest einem unabhängig steuerbaren Heizelement (7) beheizt werden kann; wobei das Material (1) dabei auf eine kritische Temperatur erhitzt wird, bei welcher die Oberflächen der Sandkörner (1) plastisch werden und die Sandkörner (1) aufgrund des Treibmittels gebläht werden; wobei das geblähte Material (2) aus dem Ofen (3) ausgetragen wird, wobei weiters das Aufgeben des Materials (1) gemeinsam mit einer Luftmenge von unten erfolgt, wobei das Material (1) mittels der im Ofenschacht (4) von unten nach oben strömenden, eine Luftströmung ausbildenden Luftmenge von unten nach oben entlang der Förderstrecke (5) gefördert wird und wobei das Blähen der Sandkörner (1) in der oberen Hälfte, vorzugsweise im obersten Drittel, der Förderstrecke (5) erfolgt, **dadurch gekennzeichnet, dass** das Material (1) angewärmt wird, sodass das Material (1) unmittelbar vor dessen Eintritt in den Ofenschacht (4) eine Materialeintrittstemperatur (T3) aufweist, die kleiner ist als die kritische Temperatur und größer als eine Umgebungstemperatur (RT).

2. Verfahren nach Anspruch 1, **dadurch gekennzeichnet, dass** die Luftmenge auf eine zweite erhöhte Temperatur (T2), die kleiner ist als die kritische Temperatur und größer als die Umgebungstemperatur (RT), angewärmt wird.

3. Verfahren nach Anspruch 2, **dadurch gekennzeichnet, dass** als Mittel zum Anwärmen des Materials (1) auf die Materialeintrittstemperatur (T3) zumindest, vorzugsweise lediglich, die auf die zweite erhöhte Temperatur (T2) angewärmte Luftmenge vorgesehen ist.

4. Verfahren nach einem der Ansprüche 1 bis 3, **dadurch gekennzeichnet, dass** bei Detektion einer ersten Verringerung der Temperatur des Materials (1) zwischen zwei aufeinander folgenden Positionen (10) entlang der Förderstrecke (5) die Heizelemente (7) entlang der verbleibenden Förderstrecke (5) in Abhängigkeit von der kritischen Temperatur geregelt werden, um eine Zunahme der Materialtemperatur entlang der verbleibenden Förderstrecke (5) auf oder über die kritische Temperatur zu verhindern oder gezielt zu ermöglichen.

5. Verfahren nach einem der Ansprüche 1 bis 4, **dadurch gekennzeichnet, dass** nach dem Austragen die Größe und/oder Dichte der geblähten Sandkörner (2), vorzugsweise laufend, bestimmt wird.

6. Verfahren nach Anspruch 5, **dadurch gekennzeichnet, dass** zur Regelung der Dichte der geblähten Sandkörner (2) die Leistung des mindestens einen Heizelements (7) einer letzten Heizzone (11) gesteuert wird.

7. Verfahren nach einem der Ansprüche 4 bis 6 und Anspruch 4, **dadurch gekennzeichnet, dass** zur Regelung einer Position der detektierten ersten Verringerung der Temperatur des Materials (1) bis auf die Leistung des mindestens einen Heizelements (7) einer letzten Heizzone (11) die Leistungen der Heizelemente (7) aller Heizzonen (6) gesteuert werden.

8. Verfahren nach einem der Ansprüche 1 bis 7, **dadurch gekennzeichnet, dass** zusätzlich eine Zuluft (34) von unten in den Ofenschacht (4) eingeblasen und/oder eingesaugt wird, um die Förderung des Materials (1) entlang der Förderstrecke (5) zu unterstützen, wobei die Zuluft (34) vor deren Eintritt in den Ofenschacht (4) auf eine weitere erhöhte Temperatur (T4) vorgewärmt wird.

9. Vorrichtung zur Herstellung eines geblähten Granulats (2) aus sandkornförmigem, mineralischem Material (1) mit einem Treibmittel, beispielsweise zur Herstellung eines geblähten Granulats aus Perlit- (1) oder Obsidiansand, die Vorrichtung umfassend einen Ofen (3) mit einem im Wesentlichen senkrecht stehenden Ofenschacht (4), der ein oberes Ende (12) und ein unteres Ende (13) aufweist, wobei zwischen den beiden Enden (12, 13) eine Förderstrecke (5) verläuft, welche durch mehrere, vertikal voneinander getrennt angeordnete Heizzonen (6) führt, wobei die Heizzonen (6) jeweils zumindest ein voneinander unabhängig steuerbares Heizelement (7) aufweisen, um das Material (1) auf eine kritische Temperatur zu erhitzen und die Sandkörner (1) zu blähen, wobei weiters mindestens ein Zuführmittel (14) vorgesehen ist, um das ungeblähte Material (1) gemeinsam mit einer Luftmenge am unteren Ende (13) des Ofenschachts (4) in Richtung oberes Ende (12) des Ofenschachts (4) so in den Ofenschacht (4) einzublasen, dass die Luftmenge eine von unten nach oben strömende Luftströmung ausbildet, mittels welcher das Material (1) von unten nach oben entlang der Förderstrecke (5) gefördert wird, um in der oberen Hälfte, vorzugsweise im obersten Drittel, der Förderstrecke (5) gebläht zu werden, **dadurch gekennzeichnet, dass** mindestens ein dem Ofenschacht (4) vorgeschaltetes Mittel zum Anwärmen des Materials (1) vorgesehen ist, um zu gewährleisten, dass das Material (1) bei dessen Eintritt in den Ofenschacht (4) eine Materialeintrittstemperatur (T3) aufweist, die kleiner ist als die kritische Temperatur und größer als eine Umgebungstemperatur (RT).

10. Vorrichtung nach Anspruch 9, **dadurch gekennzeichnet, dass** mindestens ein dem Ofenschacht (4) vorgeschaltetes Mittel zum Anwärmen der Luftmenge auf eine zweite erhöhte Temperatur (T2), die kleiner ist als die kritische Temperatur und größer als die Umgebungstemperatur (RT), vorgesehen ist.

11. Vorrichtung nach Anspruch 10, **dadurch gekennzeichnet, dass** als Mittel zum Anwärmen des Materials (1) auf die Materialeintrittstemperatur (T3) zumindest, vorzugsweise lediglich, die auf die zweite erhöhte Temperatur (T2) angewärmte Luftmenge vorgesehen ist.

12. Vorrichtung nach einem der Ansprüche 9 bis 11, **dadurch gekennzeichnet, dass** Materialtemperaturmessmittel (23, 24) zur direkten und/oder indirekten Messung der Temperatur und/oder der Temperaturänderung des Materials (1) entlang der Förderstrecke (5) vorgesehen sind sowie eine Regel- und Steuereinheit (16), die mit den Materialtemperaturmessmitteln (23, 24) und mit den Heizelementen (7) der Heizzonen (6) verbunden ist, um eine erste Verringerung der Temperatur des Materials (1), bevorzugt von mindestens 20°C, zwischen zwei aufeinander folgenden Positionen (10) entlang der Förderstrecke (5) zu detektieren, und dass die Heizelemente (7) durch die Regel- und Steuereinheit (16) in Abhängigkeit von der kritischen Temperatur regelbar sind, um eine Zunahme der Materialtemperatur entlang der verbleibenden Förderstrecke (5) auf oder über die kritische Temperatur zu verhindern oder gezielt zu ermöglichen.

13. Vorrichtung nach einem der Ansprüche 9 bis 12, **dadurch gekennzeichnet, dass** Mittel (18, 19) zur, vorzugsweise laufenden, Bestimmung der Größe und/oder der Dichte der geblähten Sandkörner (2) vorgesehen sind.

14. Vorrichtung nach Anspruch 13, **dadurch gekennzeichnet, dass** eine Regel- und Steuereinheit (16) vorgesehen ist, die so ausgelegt ist, dass zur Regelung der Dichte der geblähten Sandkörner (2) die Leistung des mindestens einen Heizelements (7) einer letzten Heizzone (11) gesteuert wird.

15. Vorrichtung nach einem der Ansprüche 9 bis 14, **dadurch gekennzeichnet, dass** mindestens ein Mittel (35, 17) vorgesehen ist, um zur Unterstützung der Förderung des Materials (1) entlang der Förderstrecke (5) Zuluft (34) von unten in den Ofenschacht (4) einzublasen und/oder einzusaugen, und dass mindestens ein Mittel (36) zum Vorwärmen der Zuluft (34) auf eine weitere erhöhte Temperatur (T4) vorgesehen ist, welches dem Ofenschacht (4) vorgeschaltet ist.

## Claims

1. Method for producing an expanded granulate (2) from sand grain-shaped mineral material (1) having an expanding agent, for example for producing an expanded granulate from perlite sand (1) or obsidian sand; wherein the material (1) is fed into a furnace (3); wherein the material (1) is conveyed in a substantially vertically disposed furnace shaft (4) of the furnace (3) along a conveying path (5) through a plurality of heating zones (6) arranged vertically separated from one another, wherein each heating zone (6) can be heated with at least one independently controllable heating element (7); wherein the material (1) is thereby heated to a critical temperature at which the surfaces of the sand grains (1) become plastic and the sand grains (1) are expanded due to the expanding agent; wherein the expanded material (2) is discharged from the furnace (3), wherein furthermore the material (1) is fed together with a quantity of air from below, wherein the material (1) is conveyed from bottom to top along the conveying path (5) by means of the quantity of air flowing from bottom to top in the furnace shaft (4) and forming an air flow, and wherein the expansion of the sand grains (1) takes place in the upper half, preferably in the uppermost third, of the conveying path (5), **characterized in that** the material (1) is heated so that the material (1), immediately before its entry into the furnace shaft (4), has a material entry temperature (T3) which is lower than the critical temperature and higher than an ambient temperature (RT).

2. Method according to claim 1, **characterized in that** the quantity of air is heated to a second elevated temperature (T2) which is lower than the critical temperature and higher than the ambient temperature (RT).

3. Method according to claim 2, **characterized in that** at least, preferably only, the quantity of air heated to the second elevated temperature (T2) is provided as means for heating the material (1) to the material entry temperature (T3).

4. Method according to one of the claims 1 to 3, **characterized in that**, upon detection of a first reduction in the temperature of the material (1) between two successive positions (10) along the conveying path (5), the heating elements (7) along the remaining conveying path (5) are regulated as a function of the critical temperature in order to prevent or selectively enable an increase in the material temperature along the remaining conveying path (5) to or above the critical temperature.

5. Method according to one of claims 1 to 4, **characterized in that**, after discharge, the size and/or density of the expanded sand grains (2) is determined, preferably continuously.

6. Method according to claim 5, **characterized in that**, in order to regulate the density of the expanded sand grains (2), the power of the at least one heating element (7) of a last heating zone (11) is controlled.

7. Method according to one of claims 4 to 6 and claim 4, **characterized in that**, in order to regulate a position of the detected first reduction in the temperature of the material (1) apart from the power of the at least one heating element (7) of a last heating zone (11), the powers of the heating elements (7) of all heating zones (6) are controlled.

8. Method according to one of the claims 1 to 7, **characterized in that** additionally supply air (34) is injected from below and/or aspirated into the furnace shaft (4) in order to support the conveying of the material (1) along the conveying path (5), wherein the supply air (34) is preheated to a further elevated temperature (T4) before it enters the furnace shaft (4).

9. Device for producing an expanded granulate (2) from sand grain-shaped mineral material (1) having an expanding agent, for example for producing an expanded granulate from perlite (1) or obsidian sand, the device comprising a furnace (3) with a substantially vertically disposed furnace shaft (4), which has an upper end (12) and a lower end (13), wherein a conveying path (5) extends between the two ends (12, 13) through a plurality of heating zones (6) arranged vertically separated from one another, wherein the heating zones (6) each have at least one heating element (7) which can be controlled independently of one another in order to heat the material (1) to a critical temperature and to expand the sand grains (1), wherein furthermore at least one feed means (14) is also provided in order to inject the non-expanded material (1) together with a quantity of air at the lower end (13) of the furnace shaft (4) in the direction of the upper end (12) of the furnace shaft (4) into the furnace shaft (4) in such a way that the quantity of air forms an air flow flowing from bottom to top, by means of which the material (1) is conveyed from bottom to top along the conveying path (5) in order to be expanded in the upper half, preferably in the uppermost third, of the conveying path (5), **characterized in that** at least one means for heating the material (1) is provided upstream of the furnace shaft (4), in order to ensure that the material (1), when it enters the furnace shaft (4), has a material entry temperature (T3) which is lower than the critical temperature and higher than an ambient temperature (RT).

10. Device according to claim 9, **characterized in that** at least one means is provided upstream of the furnace shaft (4) for heating the air quantity to a second elevated temperature (T2) which is lower than the critical temperature and higher than the ambient temperature (RT).

11. Device according to claim 10, **characterized in that** at least, preferably only, the quantity of air heated to the second elevated temperature (T2) is provided as means for heating the material (1) to the material entry temperature (T3).

12. Device according to one of claims 9 to 11, **characterized in that** material temperature measuring means (23, 24) are provided for directly and/or indirectly measuring the temperature and/or the temperature change of the material (1) along the conveying path (5) and a regulating and control unit (16) connected to the material temperature measuring means (23, 24) and to the heating elements (7) of the heating zones (6) in order to detect a first reduction of the temperature of the material (1), preferably of at least 20°C, between two successive positions (10) along the conveying path (5), and **in that** the heating elements (7) can be regulated by the regulating and control unit (16) as a function of the critical temperature in order to prevent or selectively enable an increase in the material temperature along the remaining conveying path (5) to or above the critical temperature.

13. Device according to one of the claims 9 to 12, **characterized in that** means (18, 19) are provided for the, preferably continuous, determination of the size and/or the density of the expanded sand grains (2).

14. Device according to claim 13, **characterized in that** a regulating and control unit (16) is provided which is designed in such a way that, in order to regulate the density of the expanded sand grains (2), the power of the at least one heating element (7) of a last heating zone (11) is controlled.

15. Device according to one of the claims 9 to 14, **characterized in that** at least one means (35, 17) is provided in order to inject from below and/or aspirate supply air (34) into the furnace shaft (4) in order to support the conveying of the material (1) along the conveying path (5), and **in that** at least one means (36) is provided for preheating the supply air (34) to a further elevated temperature (T4) which is connected upstream of the furnace shaft (4).

## Revendications

1. Procédé pour la fabrication de granulés expansés (2) à partir de matériau minérale formée de grains de sable (1) avec un agent d'expansion, par exemple pour la fabrication de granulés expansés à partir de sable de perlite (1) ou d'obsidienne, dans lequel le matériau (1) est introduit dans un four (3), dans lequel le matériau (1) est acheminé dans la cuve (4) sensiblement verticale du four (3) le long d'un trajet de transport (5) passant par plusieurs zones de chauffage (6) séparées les unes des autres dans le sens vertical, chaque zone de chauffage (6) pouvant être chauffée séparément avec au moins un élément chauffant (7) qui peut être contrôlé séparément, dans lequel le matériau (1) est chauffé pendant ce temps à une température critique à laquelle les surfaces des grains de sable (1) deviennent plastiques et les grains de sable (1) sont expansés sous l'action de l'agent d'expansion, dans lequel le matériau expansé (2) est sorti du four (3), dans lequel le matériau (1) est en outre introduit en même temps qu'un débit d'air par le bas, le matériau (1) étant transporté de bas en haut le long du trajet de transport (5) au moyen du débit d'air circulant de bas en haut dans la cuve du four (4) et formant un flux d'air et l'expansion des grains de sable (1) ayant lieu dans la moitié supérieure, de préférence dans le tiers suprême, du trajet de transport (5), **caractérisé en ce que** le matériau (1) est chauffé de telle sorte que le matériau (1) présente, immédiatement avant son entrée dans la cuve du four (4), une température d'entrée du matériau (T3) qui est inférieure à la température critique et supérieure à une température ambiante (RT).

2. Procédé selon la revendication 1, **caractérisé en ce que** le débit d'air est chauffé à une deuxième température élevée (T2) qui est inférieure à la température critique et supérieure à la température ambiante (RT).

3. Procédé selon la revendication 2, **caractérisé en ce que** le moyen utilisé pour chauffer le matériau (1) à la température d'entrée du matériau (T3) est au moins, de préférence seulement, le débit d'air chauffé à la deuxième température élevée (T2).

4. Procédé selon l'une des revendications 1 à 3, **caractérisé en ce que** si une première baisse de la température du matériau (1) est détectée entre deux positions (10) successives le long du trajet de transport (5), les éléments chauffants (7) sont régulés le long du trajet de transport (5) restant en fonction de la température critique, afin d'éviter ou de permettre de façon ciblée une élévation de la température du matériau à la température critique ou au-dessus le long du trajet de transport (5) restant.

5. Procédé selon l'une des revendications 1 à 4, **caractérisé en ce qu'**après la sortie, la taille et/ou la densité des grains de sable (2) expansés sont déterminées, de préférence de façon continue.

6. Procédé selon la revendication 5, **caractérisé en ce que** pour réguler la densité des grains de sable (2) expansés, la puissance de l'au moins un élément chauffant (7) d'une dernière zone de chauffage (11) est contrôlée.

7. Procédé selon l'une des revendications 4 à 6 et la revendication 4, **caractérisé en ce que** pour réguler une position de la première baisse de la température du matériau (1) détectée, les puissances des éléments chauffants (7) de toutes les zones de chauffage (6) sont contrôlées, à l'exception de la puissance de l'au moins un élément chauffant (7) d'une dernière zone de chauffage (11).

8. Procédé selon l'une des revendications 1 à 7, **caractérisé en ce qu'**un air entrant (34) est en outre soufflé et/ou aspiré par le bas dans la cuve du four (4) pour aider au transport du matériau (1) le long du trajet de transport (5), l'air entrant (34) étant préchauffé avant son entrée dans la cuve du four (4) à une autre température élevée (T4).

9. Dispositif pour la fabrication de granulés expansés (2) à partir de matériau minérale formée de grains de sable (1) avec un agent d'expansion, par exemple pour la fabrication de granulés expansés à partir de sable de perlite (1) ou d'obsidienne, lequel dispositif comprend un four (3) avec une cuve (4) sensiblement verticale, qui présente une extrémité supérieure (12) et une extrémité inférieure (13), avec un trajet de transport (5) entre les deux extrémités (12, 13) qui passe par plusieurs zones de chauffage (6) séparées les unes des autres dans le sens vertical, chaque zone de chauffage (6) présentant au moins un élément chauffant (7) qui peut être contrôlé séparément pour chauffer le matériau (1) à une température critique et provoquer l'expansion des grains de sable (1), dans lequel est prévu en outre un moyen d'arrivée (14) pour souffler le matériau non expansé (1) dans la cuve de four (4) en même temps qu'un débit d'air à l'extrémité inférieure (13) de la cuve de four (4) en direction de l'extrémité supérieure (12) de la cuve de four (4) de telle sorte que le débit d'air forme un flux d'air circulant de bas en haut au moyen duquel le matériau (1) est transporté de bas en haut le long du trajet de transport (5) pour être expansé dans la moitié supérieure, de préférence dans le tiers suprême, du trajet de transport (5), **caractérisé en ce qu'**il est prévu au moins un moyen pour chauffer le matériau (1) monté avant la cuve du four (4) pour garantir que le matériau (1) présente, à son entrée dans la cuve du four (4), une température d'entrée du matériau (T3) qui est inférieure à la température critique et supérieure à une température ambiante (RT).

10. Dispositif selon la revendication 9, **caractérisé en ce qu'**il est prévu au moins un moyen monté avant la cuve du four (4) pour chauffer le débit d'air à une deuxième température élevée (T2) qui est inférieure à la température critique et supérieure à la température ambiante (RT).

11. Dispositif selon la revendication 10, **caractérisé en ce que** le moyen utilisé pour chauffer le matériau (1) à la température d'entrée du matériau (T3) est au moins, de préférence seulement, le débit d'air chauffé à la deuxième température élevée (T2).

12. Dispositif selon l'une des revendications 9 à 11, **caractérisé en ce que** des moyens de mesure de la température du matériau (23, 24) pour la mesure directe et/ou indirecte de la température et/ou du changement de température du matériau (1) sont prévus le long du trajet de transport (5), ainsi qu'une unité de régulation et de commande (16) qui est reliée aux moyens de mesure de la température du matériau (23, 24) et aux éléments chauffants (7) des zones de chauffage (6) pour détecter une première baisse de la température du matériau (1), de préférence d'au moins 20 °C, entre deux positions (10) successives le long du trajet de transport (5), et **en ce que** les éléments chauffants (7) peuvent être régulés par l'unité de régulation et de commande (16) en fonction de la température critique, afin d'éviter ou de permettre de façon ciblée une élévation de la température du matériau à la température critique ou au-dessus le long du trajet de transport (5) restant.

13. Dispositif selon l'une des revendications 9 à 12, **caractérisé en ce que** des moyens (18, 19) sont prévus pour déterminer, de préférence en continu, la taille et/ou la densité des grains de sable expansés (2).

14. Dispositif selon la revendication 13, **caractérisé en ce qu'**est prévue une unité de régulation et de commande (16) conçue de telle sorte que la puissance de l'au moins un élément chauffant (7) d'une dernière zone de chauffage (11) est contrôlée pour réguler la densité des grains de sable expansés (2).

15. Dispositif selon l'une des revendications 9 à 14, **caractérisé en ce qu'**au moins un moyen (35, 17) est prévu pour souffler et/ou aspirer un air entrant (34) par le bas dans la cuve du four (4) afin d'aider au transport du matériau (1) le long du trajet de transport (5) et **en ce qu'**il est prévu au moins un moyen (36) monté avant la cuve du four (4) pour préchauffer l'air entrant (34) à une autre température élevée (T4).
